**Europäisches Patentamt**

(19) **European Patent Office**

**Office européen des brevets**

(11) Publication number : **0 406 382 B1**

(12) **EUROPEAN PATENT SPECIFICATION**

(45) Date of publication of patent specification :
16.08.95 Bulletin 95/33

(51) Int. Cl.⁶ : **G06T 5/20,** G06T 5/00

(21) Application number : **90901422.7**

(22) Date of filing : **21.12.89**

(86) International application number :
**PCT/US89/05702**

(87) International publication number :
**WO 90/07751 12.07.90 Gazette 90/16**

(54) **UNSHARP MASKING USING CENTER WEIGHTED LOCAL VARIANCE FOR IMAGE SHARPENING AND NOISE SUPPRESSION.**

(30) Priority : **27.12.88 US 290655**

(43) Date of publication of application :
**09.01.91 Bulletin 91/02**

(45) Publication of the grant of the patent :
**16.08.95 Bulletin 95/33**

(84) Designated Contracting States :
**DE FR GB**

(56) References cited :
**US-A- 4 315 318**
**US-A- 4 571 635**

(73) Proprietor : **EASTMAN KODAK COMPANY**
**343 State Street**
**Rochester, New York 14650-2201 (US)**

(72) Inventor : **KWON, Heemin**
**49 Hunters Run**
**Pittsford, NY 14534 (US)**
Inventor : **LIANG, Jeanine, Tsu**
**522 VanVoorhis Avenue**
**Rochester, NY 14617 (US)**

(74) Representative : **Schmidt, Peter, Dipl.-Ing. et al**
**KODAK Aktiengesellschaft**
**Patentabteilung**
**D-70323 Stuttgart (DE)**

## Description

Unsharp masking is a well-known technique for enhancing the sharpness of processed images. Specifically, an original digitized image is stored from which a blurred version may be created by convolving it with a low pass filter (such as an unsharp mask). The difference between the blurred image and its original is multiplied by a factor K, and the resulting product is added to the original image to generate a sharpened image. The problem is how to compute the factor k by which the difference image is multiplied.

U.S. Patent No. 4,571,635 to Mahmoodi et al. teaches that the factor K is computed in accordance with a formula which depends upon the standard deviation of the image pixels in a local neighborhood. While this technique results in some improvement in the sharpness of the image, it would be desirable to obtain further improvement in image sharpness without proportionately amplifying the noise in uniform areas of the image.

### SUMMARY OF THE INVENTION

A further significant increase in image sharpness is achieved without the expected proportionate increase in noise amplification in uniform areas of the image in the image process of the present invention. In the present invention, the difference image amplification factor K is not computed in accordance with the standard deviation as in Mahmoodi. Instead it is computed in accordance with a pseudo center weighted variance process. Alternatively, a sharpened center weighted variance process is used in the invention to compute the difference image multiplication factor K. While the idea of center weighting an ensemble of image pixels in a local neighborhood has been disclosed by Kato et al., U.S. Patent No. 4,315,318, neither Kato et al. nor Mahmoodi et al. have considered such a computation in connection with the determination of the image difference multiplication factor K.

### PSEUDO CENTER WEIGHTED VARIANCE

In the pseudo center weighted variance process of the invention, the difference image multiplication factor K is determined for each pixel in the original image in accordance with a pseudo center weighted variance computed for all pixels in a predefined neighborhood surrounding the pixel of interest. Computation of the pseudo center weighted variance, in accordance with the invention, is as follows: The pixels in the neighborhood are individually squared and then convolved with a kernel having the same dimensionality as the neighborhood, the kernel comprising a mask of center weight coefficients whose maximum value lies in the center of the kernel. Further, each pixel in the neighborhood is convolved (without being squared) with the same kernel of center weighted coefficients, and the result of the latter convolution is then taken as a whole and squared, the results of the squaring then being subtracted from the previous convolution. The resulting difference is the pseudo center weighted variance. The difference image multiplication factor K is then determined in accordance with a function that increases as the pseudo center weighted variance increases.

Depending upon the steepness of the topology of the kernel of center weighted coefficients, the resulting sharpened image reproduces the edges in the original image with greater fidelity but without as much accentuation of noise in uniform image areas as might be expected. This technique thus provides a significant improvement in the art.

### DESCRIPTION OF THE DRAWINGS

The invention may be understood by reference to the accompanying drawings of which:

Fig. 1 is a block diagram illustrating the system of the invention;

Fig. 2a is a perspective view of a three-dimensional function defining the distribution of center weighted weighting coefficients employed in the system of Fig. 1;

Fig. 2b is a diagram of a kernel of weighting functions constructed from the three-dimensional function of Fig. 2a;

Fig. 2c illustrates the use of the kernel of weighting functions of Fig. 2b in a large image array of pixels by the system of Fig. 1;

Figs. 3a and 3b illustrate alternative computations of the sharpening factor K as a function of the center weighted variance V in the system of Fig. 1;

Fig. 4 illustrates the distribution of variance values for uniform, textured and sharp image areas; and

Fig. 5 is a block diagram illustrating an alternative center weighted variance process which may be employed in the system of Fig. 1.

DETAILED DESCRIPTION

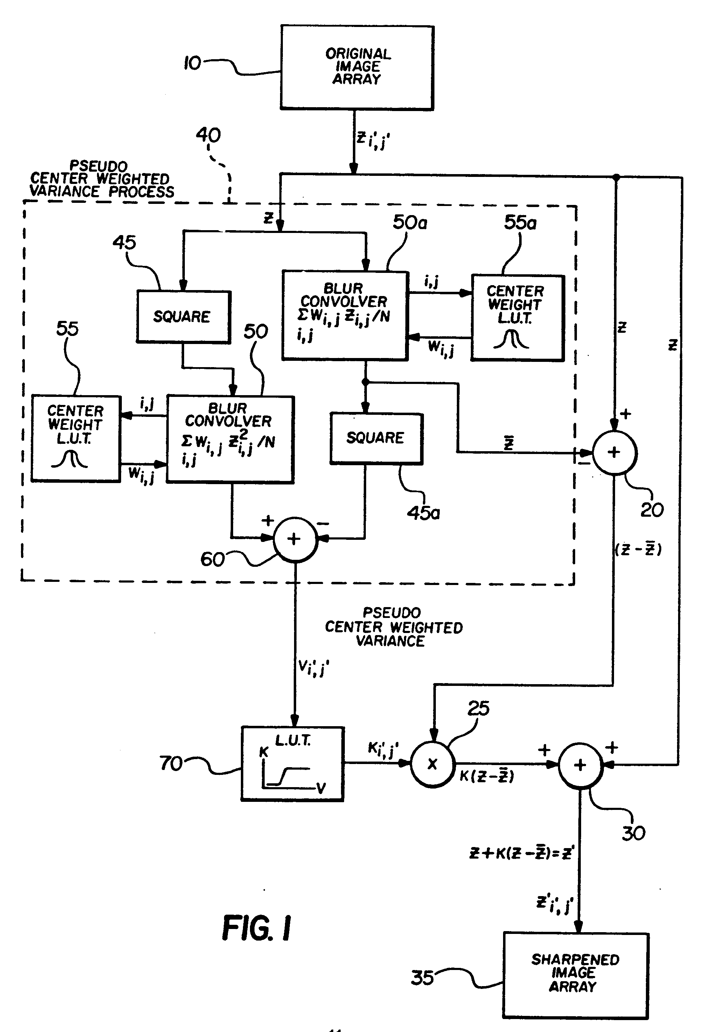

Referring to Fig. 1, an original image array, comprising a plurality of digitized image pixels defining a two-dimensional image, is stored in a memory 10, each pixel Z being uniquely identified by a two-dimensional symbol $Z_{i',j'}$. The unsharp masking process, in accordance with well-known techniques, employs a blurring processor 50a which, in essence, averages each pixel received from the memory 10 with all of its neighbors in a small window of pre-defined size, typically 11 pixels by 11 pixels. The result is a blurred pixel which is then subtracted from the original pixel by a subtractor 20. The difference is then multiplied by a sharpening factor K at a multiplier 25, and the product is then added to the original image at an adder 30. The factor K is proportional to the center weighted variance of a small image neighborhood surrounding the pixel of interest. In local image neighborhoods having fairly large variances, K > 0, and the result is a sharpened image pixel $Z'_{i',j'}$ which is stored in a memory 35. After all of the image pixels stored in the memory 10 have been thus processed, the array of image pixels in the memory 35 defines a much sharper image than the original array stored in the memory 10.

Reducing the foregoing to an algebraic expression, the system of Fig. 1 constructs the sharpened image Z′ from the original and blurred images, Z and $\overline{Z}$ respectively, as follows:

$$(0) \qquad Z' = Z + K(Z - \overline{Z}).$$

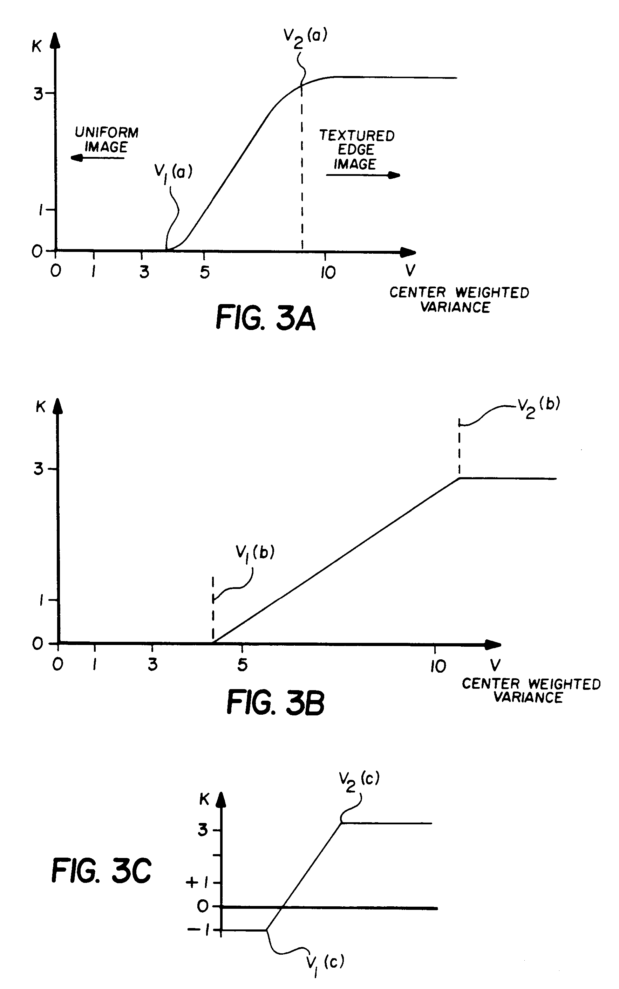

In one aspect of the invention, it is not always desirable to sharpen the image, particularly in those image areas containing no sharp features, as this would simply boost the noise. The present invention avoids such pitfalls. For example, in somewhat uniform image neighborhoods K may equal 0 so that Z′ = Z in Equation (0), which avoids boosting noise because the output image Z′ is simply the original image Z. In perfectly uniform image neighborhoods K may equal -1 so that $Z' = \overline{Z}$ in Equation (0), which achieves noise suppression because the output image Z′ is simply the blurred image $\overline{Z}$. The manner in which the invention provides both sharpening and noise suppression in different neighborhoods of the same image is described hereinbelow with respect to Figs. 3b and 3c.

PSEUDO CENTER WEIGHTED VARIANCE PROCESS

In the present invention, the sensitivity of the system of Fig. 1 to sharp features in the original image stored in the memory 10, and the fidelity with which such sharp features are reproduced by the system of Fig. 1, are increased without (as would previously have been expected) unduly accentuating noise in uniform areas of the image (areas not containing sharp features). This is done by computing individual sharpening multiplier coefficients $K_{i',j'}$ for each image pixel $Z_{i',j'}$ processed in the system of Fig. 1 in accordance with the pseudo center weighted variance process. A pseudo center weighted variance processor 40 (hereinafter referred to as the pseudo processor 40) performs the computation. Such a processor may be a software- or firmware-programmed machine or may be a dedicated hard-wired processor.

The pseudo processor 40 comprises two branches. In Fig. 1, the first branch comprises a square function 45 which computes the square of the value of each image pixel $Z_{i',j'}$. This branch further comprises a blur convolver 50 and an associated center weight look-up table 55. The look-up table 55 stores a two-dimensional kernel of predetermined size (preferably 11 pixels by 11 pixels) comprising weighting coefficients of which the centermost has the greatest amplitude while the outermost weighting coefficients have the smallest amplitudes, there being a continual variation therebetween.

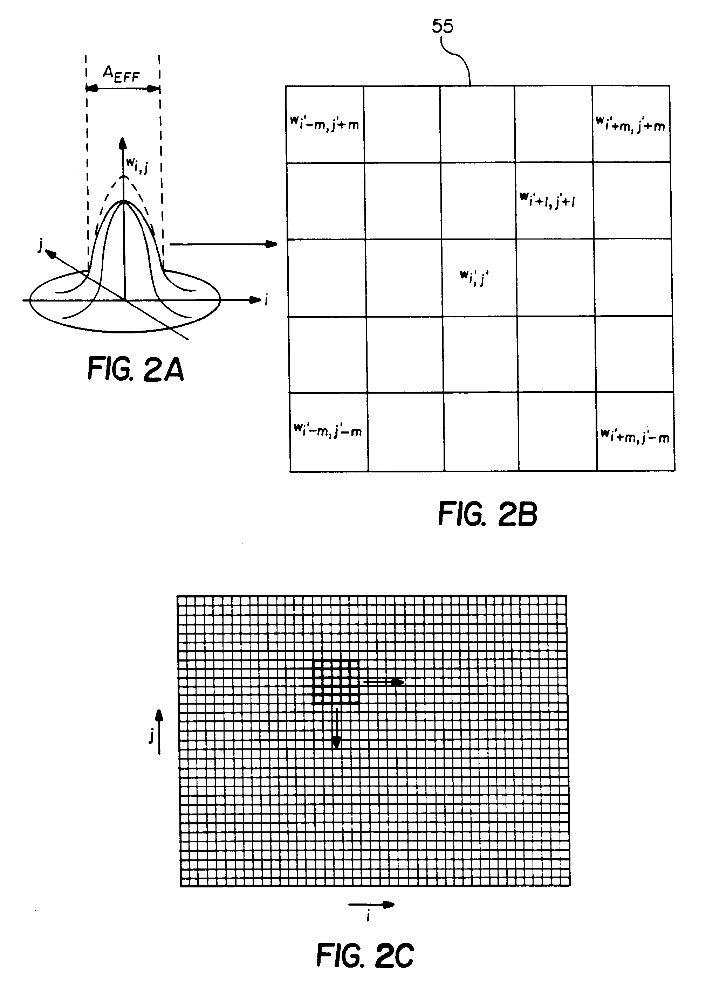

The topology defined by the weighting coefficients stored in the look-up table 55 is illustrated in Fig. 2a. The look-up table 55 stores an 11 x 11 kernel such as that illustrated in Fig. 2b, comprising $11^2$ (or 121) weighting coefficients discretely defined at 121 points in an 11 x 11 square array. The blur convolver 50 convolves an 11 x 11 neighborhood of image pixels taken from the original image array memory 10 surrounding the current pixel of interest, $Z_{i',j'}$, with the corresponding weighting coefficients comprising the 11 pixel by 11 pixel square window of weighting coefficients illustrated in Fig. 2b. The blur convolution performed by the blur convolver 50 performs the following process:

$$(1) \qquad \sum_{i=i'-m,\ j=j'-m}^{i'+m,\ j'+m} W_{i,j}\, \overline{Z}_{i,j}^{\,2}/N \ ,$$

where

$$N = \sum_{i,j} W_{i,j}$$

and $m = \dfrac{n-1}{2}$, where n is the size of the kernel. (Note: n = 11 in the present example.)

The foregoing process is repeated for each pixel in the original image array memory 10, so that the kernel (or "window") of Fig. 2b is, in effect, moved across the two-dimensional image array so as to cover it entirely, one pixel at a time, in the manner illustrated in Fig. 2c.

Each discrete summation computed by the blur convolver 50 is transmitted to the positive input of an adder 60. The negative input of the adder 60 receives a corresponding result computed in the other branch of the pseudo processor 40.

The other branch of the pseudo processor 40 includes a second blur convolver 50a and a center weight look-up table 55a, preferably identical to the first center weight look-up table 55. The blur convolver 50a operates in a manner identical to the blur convolver 50, except that it receives each image pixel $Z_{i',j'}$ from the original array memory 10 without it being squared. Thus, the blur convolver 50a performs the same process except that it works on an array of unsquared image pixels $Z_{i',j'}$. The blur convolver 50a thus performs the following operation:

$$(2) \quad \sum_{i=i'-m, j=j'-m}^{i'+m,\ j'+m} W_{i,j} Z_{i,j}/N$$

Each summation performed by the blur convolver 50a is then transmitted as a discrete value to a square function 45a, which functions in the manner identical to that of square function 45, in that it squares the value it receives. The output of the square function 45a is applied to the negative input of the adder 60 which then outputs, for each pixel $Z_{i',j'}$ in the original image array, a pseudo center weighted variance $V_{i',j'}$.

From the foregoing, it should be apparent that the output of the adder 60 is defined as follows:

$$(3) \quad \sum_{i,j} W_{i,j} (Z_{i,j})^2/N \ - \ [\sum_{i,j} W_{i,j} Z_{i,j}/N]^2 .$$

Each pseudo center weighted variance $V_{i',j'}$ is applied to a look-up table 70 which, in response, furnishes a corresponding sharpening multiplier coefficient $K_{i',j'}$ to the input of the multiplier 25. It should be noted that in the absence the center weighting feature of the invention, all $w_{i,j} = 1$, and the center weighted variance becomes a standard definition of variance.

In accordance with the invention, the look-up table 70 defines the multiplier coefficient K as a function of the pseudo center weighted variance V, as illustrated in Fig. 3a. Alternatively, Fig. 3b illustrates a somewhat discontinuous way of defining K in terms of V, in that each knee in the curve is really a sharp corner. Other definitions of K as a function of V are perfectly acceptable within the scope of the invention, the central idea being that a greater variance justifies a greater sharpening of the image and therefore a larger value of the sharpening multiplier coefficient K.

A fairly large kernel (11 x 11 pixels) is preferred to avoid blocking artifacts because the "effective" area $A_{EFF}$ in Fig. 2a is reduced due to the decrease in kernel amplitude at the outer pixels.

CALCULATION OF $V_1$ AND $V_2$

For a given input image or set of input images having the same noise characteristics, the variances $V_1$ and $V_2$ (defining the knees of the curves of Fig. 3) must first be calculated before the image is processed. To calculate $V_1$, a very uniform area in the image is chosen, and the variance value of each of the pixels in the uniform area is computed. $V_1$ is the average of all those variance values.

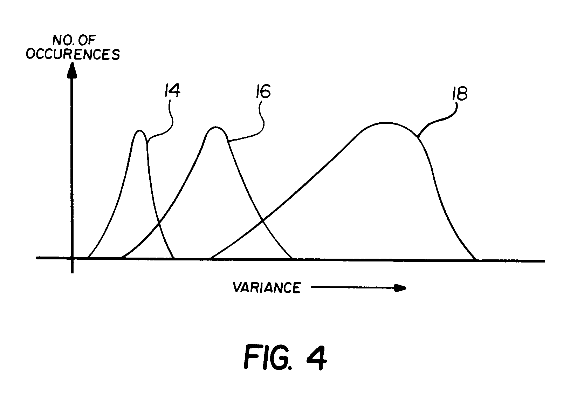

$V_2$ preferably lies between the typical variance value of textured areas and the typical variance value of sharp edge areas in the same image. Fig. 4 is a graph showing variance values plotted against distribution (number of occurrences) for film grain noise (a "uniform" area) (Curve 14), texture (Curve 16), and sharp edge detail (Curve 18) for a typical digital image produced by scanning a photograph. The typical variance values of "texture" and "sharp edge" image areas correspond to the peaks of the curves 16 and 18, respectively, in Fig. 4. $V_2$ is adjusted to find the most natural looking rendition of texture area. Typically, this adjustment is done by varying $V_2$ between the peak variance values of the curves 16 and 18 of Fig. 4 on a trial-by-error basis. Once this optimum value $V_2$ is found, it remains constant for the entire input image and subsequent input images of the same type.

## SHARPENING WITH NOISE SUPPRESSION

Both image sharpening and noise suppression are achieved in different areas of the <u>same</u> image by employing the amplification factor function illustrated in Fig. 3b or 3c. Sharpening occurs for values of k > 0 while noise reduction occurs for values of -1 < k < 0.

## SHARP CENTER WEIGHTED VARIANCE PROCESS

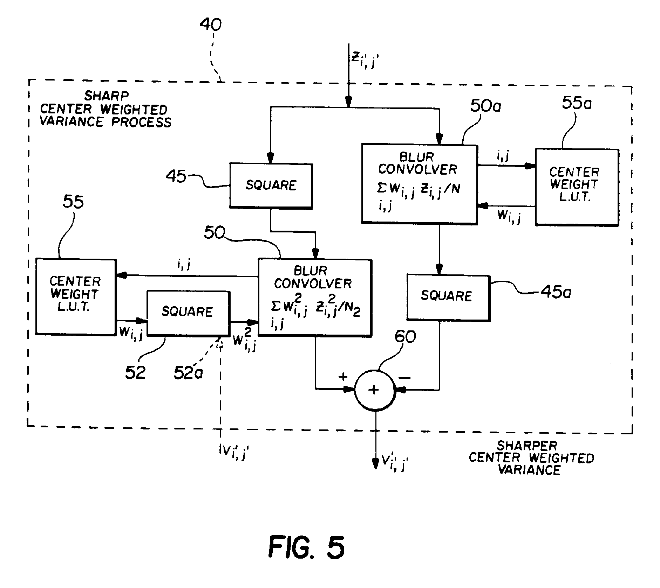

For even greater sensitivity to sharp features in the computation of the center weighted variant, a sharp center weighted variance processor 40' (illustrated in Fig.5 ) may be substituted for the pseudo center weighted variance processor 40 in the system of Fig. 1. The sharp center weighted variance processor 40' is virtually identical to the pseudo center weighted variance processor 40, except that a square function 52 is interposed between the output of the center weight look-up table 55 and the blur convolver 50, so that each center weight coefficient $W_{i,j}$ is first squared, to become $W_{i,j}^2$, and the latter is then furnished to the blur convolver 50. (In a simpler embodiment, the square function 52 is implemented in the look-up table 55.) Thus, the sharp center weighted variance computed at the output of the adder 60 is as follows:

$$(4) \quad \sum_{i,j} W_{i,j}^2 (Z_{i,j})^2 / N_2 \; - \; [\sum_{i,j} W_{i,j} Z_{i,j} / N]^2 ,$$

where

$$N_2 = \sum_{i,j} W_{i,j}^2$$

The result is that the topology of the weighting coefficients employed in the blur convolver 50 of Fig. 5 is much sharper, corresponding to the dotted line topology suggested in Fig. 2a.

In another variation on Fig. 5, the square function 52 has the ability to raise each weighting coefficient $W_{i,j}$ to any power between unity and 2 (or any other power greater than unity). The power which the variable square function 52 employs is in turn determined by a computation of the pseudo variance by the pseudo variance processor 40, each pseudo variance computed by the pseudo variance processor 40 being applied at a control input 52a of the variable square function 52. Preferably, for smaller values of the pseudo center weighted variance, the variable square function 52 raises $W_{i,j}$ to the minimum power (e.g., unity) while for larger values of the pseudo variance received at its control input 52a, the variable square function 52 raises each center weighted coefficient $W_{i,j}$ to the highest power.

## Claims

1. An image enhancement processing system comprising:

means for receiving an original image (10) comprising an array of pixels, an amplitude value being associated with each original image pixel;

means (55a) for storing a mask of weighted coefficients ($W_{i,j}$) having a centermost coefficient of maximum amplitude and outermost coefficients of minimum amplitudes, said mask corresponding to a local neighbourhood within said array of pixels;

first convolver means (50a) for computing, for each current pixel of said original image, a blurred pixel amplitude value ($\bar{z}$) by convolving said mask of coefficients with the amplitude values (Z) of the corresponding original image pixels of a local neighbourhood centered on said current pixel of the original image;

first differencing means (20) for computing the amplitude difference between said current pixel and the corresponding blurred pixel;

means (25) for multiplying the difference computed by said first differencing means (20) by a factor K to produce a product;

adder means (30) for adding said product to the amplitude value (Z) of said current pixel to produce a filtered pixel value (Z');

means (35) for storing said filtered pixel value for each pixel of said original image whereby a frame of filtered pixels represents an enhanced image;

said system being characterized in that, for each current pixel of said original image, said factor K is provided by means (40,70) comprising:

first squaring means (45a) for calculating the square of said blurred pixel amplitude value ($\bar{z}$);

second squaring means (45) for calculating the square of the amplitude values of the corresponding original image pixels of said local neighbourhood centered on said current pixel;

means (55) for storing a second mask of weighted coefficients having a centermost coefficient of maximum amplitude and outermost coefficients of minimum amplitudes, said second mask also corresponding to said local neighbourhood of pixels;

second convolver means (50) for computing, for each current pixel of said original image, a blurred squared pixel value by convolving said second mask of weighted coefficients with the squared amplitude values provided by said second squaring means (45);

second differencing means (60) for subtracting the output of said first squaring means (45a) from the output of said second convolver means (50) so as to produce a center weighted variance ($V_{i,j}$); and

look-up table means (70) defining said factor K as a function of said center weighted variance and transmitting, for each current pixel of said original image, the corresponding factor K to said multiplying means (25).

2. The system of claim 1, wherein said filtered pixel value (Z') corresponds to a new image sharpened with respect to said original image to a degree proportional to the amount by which said center weighted variance ($V_{i,j}$) exceeds a first predetermined value ($V_1$), whereby maximum sharpening is obtained when said center weighted variance equals or exceeds a second predetermined value ($V_2$) greater than said first predetermined value ($V_1$).

3. The system of claim 1, wherein said filtered pixel value (Z') corresponds to a new image blurred with respect to said original image to a degree proportional to the amount by which said center weighted variance ($V_{i,j}$) is less than said first predetermined value ($V_1$).

4. The system of claim 2, wherein said second predetermined value ($V_2$) lies between a variance value typical of textured areas in said original image and a variance value typical of sharp edged areas in said original image.

5. The system of claims 2 or 3, wherein said first predetermined value ($V_1$) corresponds to the average variance value of uniform areas in said original image.

6. The system of claim 1, wherein said look-up table means (70) defining said multiplying factor K as a function of said center weighted variance ($V_{i,j}$) defines said multiplying factor K increasing as said center weighted variance increases over a finite range of said variance, whereby said factor K has a selected low value at and/or below a first predetermined value ($V_1$) of said variance corresponding to the average variance value of uniform areas in said original image, said factor K increasing to a selected high value at and/or above a second predetermined value ($V_2$) of said variance, said second predetermined value ($V_2$) lying between a variance value typical of textured areas in said original image and a variance value typical of sharp edged areas in said original image.

7. The system of claim 1 further comprising a third squaring means (52) for computing the square of each of said weighting coefficients ($W_{i,j}$) and then transmitting said square of said weighting coefficient to said second convolver means (50) instead of said weighting coefficient.

8. The system of claim 7, wherein said third squaring means (52) comprises means for raising each of said weighting coefficients to a variable power, said power lying between unity and a selected number greater than unity in proportion to the magnitude received at a control input (52a) thereof, said system further comprising means for computing the variance ($V_{i,j}$) of said current pixel and transmitting said variance to said control input (52a) whereby said variable power of said third squaring means (52) increases as said variance increases.

9. The system of claims 1 or 8, wherein said look-up table means (70) defining said sharpening multiplying factor K as a function of said variance ($V_{i,j}$) transmits a high value of K which results in maximum image sharpening in response to receiving a variance value at least nearly typical of sharp edge areas of said image and transmits a low value of K which results in maximum image blurring in response to receiving a variance value at least nearly typical of uniform areas of said image, whereby said system performs both image sharpening and noise suppression in the same image.

10. The system of claim 9, wherein said high value of K is greater than unity while said low value of K is less than zero.

**Patentansprüche**

1. Bildbearbeitungssystem mit folgenden Komponenten:
   - Mitteln zum Empfangen von eine Pixelmatrix aufweisenden Originalbilddaten (10), wobei jedem Pixel des Originalbildes ein Amplitudenwert zugeordnet ist;
   - Mitteln (55a) zum Speichern einer Maske gewichteter Koeffizienten ($W_{i,j}$) bestehend aus einem zentralen Koeffizienten maximaler Amplitude und periphären Koeffizienten minimaler Amplitude, wobei die Maske einer lokalen Umgebung innerhalb der Pixelmatrix entspricht;
   - ersten Konvolvierungsmitteln (50a) zum Berechnen - für jedes aktuelle Pixel des Originalbildes - der Amplitude ($\bar{z}$) eines unscharfen Pixelwerts durch Konvolvieren der Koeffizientenmaske mit den Amplitudenwerten (Z) der entsprechenden, auf das aktuelle Pixel des Originalbildes zentrierten Originalbildpixel einer lokalen Umgebung;
   - ersten Subtraktionsmitteln (20) zum Berechnen der Amplitudendifferenz zwischen dem aktuellen Pixel und dem entsprechenden unscharfen Pixel;
   - Mitteln (25) zum Multiplizieren der mittels der ersten Subtraktionsmittel (20) berechneten Differenz mit einem Faktor K, um ein Produkt zu erzeugen;
   - Addiermitteln (30) zum Addieren des Produkts und des Amplitudenwerts (Z) des aktuellen Pixels, um einen gefilterten Pixelwert (Z') zu erhalten;
   - Mitteln (35) zum Speichern des gefilterten Pixelwerts für jedes Pixel des Originalbildes, wobei die Gesamtheit der zu einem Bild gehörenden gefilterten Pixel ein verbessertes Bild darstellt; <u>dadurch gekennzeichnet,</u> daß für jedes aktuelle Pixel des Originalbildes der Faktor K durch Mittel (40, 70) erzeugt wird, die folgende Komponenten umfassen:
   - erste Quadriermittel (45a) zum Berechnen des Quadrats des Amplitudenwerts ($\bar{z}$) des unscharfen Pixels;
   - zweite Quadriermittel (45) zum Berechnen des Quadrats der Amplitudenwerte der entsprechenden auf das aktuelle Pixel zentrierten Originalbildpixel der lokalen Umgebung;
   - Mittel (55) zum Speichern einer zweiten Maske gewichteter Koeffizienten bestehend aus einem zentralen Koeffizienten maximaler Amplitude und periphären Koeffizienten minimaler Amplitude, wobei die zweite Maske ebenfalls der lokalen Umgebung innerhalb der Pixelmatrix entspricht;
   - zweite Konvolvierungsmittel (50) zum Berechnen - für jedes aktuelle Pixel des Originalbildes - eines unscharfen, quadrierten Pixelwerts durch Konvolvieren der zweiten Maske gewichteter Koeffizienten mit den quadrierten, durch die zweiten Quadriermittel (45) erzeugten Amplitudenwerten;
   - zweite Subtraktionsmittel (60) zum Subtrahieren des Ausgangswerts der ersten Quadriermittel (45a) vom Ausgangswert der zeiten Konvolvierungsmittel (50), so daß eine zentral gewichtete Varianz ($V_{i,j}$) erzeugt wird;
   - eine Transformationstabelle (70), die den Faktor K in Abhängigkeit von der zentral gewichteten Varianz festlegt und den entsprechenden Faktor K den Multipliziermitteln (25) zuführt.

2. Bildbearbeitungssystem nach Anspruch 1, dadurch gekennzeichnet, daß der gefilterte Pixelwert (Z') einem neuen Bild entspricht, das gegenüber dem Originalbild um einen Betrag schärfer ist, der zu dem Betrag, um den die zentral gewichtete Varianz ($V_{i,j}$) einen ersten vorgegebenen Wert übersteigt, proportional ist, wobei eine maximale Schärfe erreicht wird, wenn die zentral gewichtete Varianz einem den ersten vorgegebenen Wert ($V_1$) übersteigenden zweiten vorgegebenen Wert ($V_2$) entspricht oder größer als dieser ist.

3. Bildbearbeitungssystem nach Anspruch 1, dadurch gekennzeichnet, daß der gefilterte Pixelwert (Z') einem neuen Bild entspricht, das gegenüber dem Originalbild um einen Betrag unschärfer ist, der zu dem Betrag, um den die zentral gewichtete Varianz ($V_{i,j}$) unter dem ersten vorgegebenen Wert ($V_1$) liegt, proportional ist.

4. Bildbearbeitungssystem nach Anspruch 2, dadurch gekennzeichnet, daß der zweite vorgegebene Wert ($V_2$) zwischen einem für strukturierte Bereiche des Originalbildes typischen Varianzwert und einem für scharf-begrenzte Bereiche des Originalbildes typischen Varianzwert liegt.

5. Bildbearbeitungssystem nach Anspruch 2 oder 3, dadurch gekennzeichnet, daß der erste vorgegebene Wert ($V_1$) dem durchschnittlichen Varianzwert gleichmäßiger Bereiche des Originalbildes entspricht.

6. Bildbearbeitungssystem nach Anspruch 1, dadurch gekennzeichnet, daß die den Multiplizierfaktor K in Abhängigkeit von der zentral gewichteten Varianz ($V_{i,j}$) definierende Transformationstabelle (70) den Multiplizierfaktor K bestimmt, der sich mit der Vergrößerung der zentral gewichteten Varianz über einen begrenzten Bereich derselben ebenso vergrößert, wobei der Faktor K einen ausgewählten niedrigen Wert aufweist, der bei und/oder unter einem ersten vorbestimmten Wert ($V_1$) der Varianz liegt, der dem durchschnittlichen Varianzwert gleichmäßiger Bereiche des Originalbildes entspricht, und wobei sich der Faktor K bis zu einem ausgewählten hohen Wert vergrößert, der bei und/oder über einem zweiten vorgegebenen Wert ($V_2$) der Varianz liegt, wobei der zweite vorgegebene Wert ($V_2$) zwischen einem für strukturierte Bereiche des Originalbildes typischen und einem für scharf-begrenzte Bereiche typischen Varianzwert liegt.

7. Bildbearbeitungssystem nach Anspruch 1, gekennzeichnet durch dritte Quadriermittel (52) zum Berechnen des Quadrats jedes der gewichteten Koeffizienten ($W_{i,j}$) und zum Zuführen der jeweiligen Quadrate zu den zweiten Konvolvierungsmitteln (50) anstatt zu den gewichteten Koeffizienten.

8. Bildbearbeitungssystem nach Anspruch 7, dadurch gekennzeichnet, daß die dritten Quadriermittel (52) Mittel umfassen, die jeden der gewichteten Koeffizienten zu einer variablen Potenz erheben, die zwischen Eins und einer ausgewählten Zahl > 1 im Verhältnis zu der am Steuereingang (52a) empfangenen Größe liegt, wobei das System zusätzlich Mittel aufweist zum Berechnen der Varianz ($V_{i,j}$) des aktuellen Pixels und zu deren Übermittlung an den Steuereingang (52a), und wobei sich die variable Potenz der dritten Quadriermittel (52) mit der Vergrößerung der Varianz vergrößert.

9. Bildbearbeitungssystem nach Anspruch 1 oder 8, dadurch gekennzeichnet, daß die den Bildschärfe-Multiplizierfaktor K in Abhängigkeit von der Varianz ($V_{i,j}$) definierende Transformationstabelle (70) einen hohen K-Wert übermittelt, aus dem sich eine maximale Bildschärfe in Abhängigkeit vom Empfang eines Varianzwerts ergibt, der für scharf-begrenzte Bildbereiche zumindest nahezu typisch ist, und einen niedrigen K-Wert übermittelt, aus dem sich eine maximale Bildunschärfe in Abhängigkeit vom Empfang eines Varianzwerts ergibt, der für gleichmäßige Bildbereiche zumindest nahezu typisch ist, wobei das System im gleichen Bild sowohl die Bildschärfe erhöht als auch Bildstörungen unterdrückt.

10. Bildbearbeitungssystem nach Anspruch 9, dadurch gekennzeichnet, daß der hohe K-Wert größer als 1 und der niedrige K-Wert kleiner als 0 ist.

## Revendications

1. Dispositif de traitement d'images comprenant :
   un moyen pour recevoir une image originale (10) comprenant un ensemble de pixels, une valeur d'amplitude étant associée à chacun de ces pixels ;
   un moyen (55a) pour emmagasiner un masque constitué de coefficients de pondération ($W_{ij}$) , le coefficient central ayant l'amplitude maximale et les coefficients périphériques ayant des amplitudes respectives plus faibles, ledit masque correspondant à un voisinage local à l'intérieur dudit ensemble de pixels ;
   un premier moyen de convolution (50a) pour calculer, pour chaque pixel courant de l'image originale, une valeur d'amplitude (z) de pixel flou en convoluant ledit masque de coefficients avec les valeurs d'amplitudes (Z) des pixels de l'image originale d'un voisinage local centré sur ledit pixel courant de l'image originale ;
   un premier moyen de soustraction (20) pour calculer la différence d'amplitude entre ledit pixel courant et ledit pixel flou correspondant ;

un moyen de multiplication (25) pour multiplier ladite valeur de différence calculée par le moyen de soustraction (20) par un facteur K pour produire une valeur produit ;

un moyen d'addition (30) pour additioner ladite valeur produit à la valeur de l'amplitude (Z) dudit pixel courant afin de produire une valeur de pixel filtrée (Z') ;

un moyen (35) pour emmagasiner lesdites valeurs filtrées pour chaque pixels de l'image originale et obtenir un ensemble de pixels filtrés representatifs d'une image améliorée ;

ledit dispositif étant caractérisé en ce que, pour chaque pixel courant de l'image originale, ledit facteur K est fournit par un moyen (40, 70) comprenant :

un premier moyen d'élévation au carré (45a) pour calculer le carré de la valeur de l'amplitude $(\bar{z})$ associé au pixel flou ;

un second moyen d'élévation au carré (45) pour calculer les carrés des valeurs de l'amplitude associé aux pixels correspondants de l'image originale situés dans le voisinage local centré sur ledit pixel courant ;

un moyen (55) pour emmagasiner un second masque constitué de coefficients de pondération, le coefficient central ayant l'amplitude maximale et les coefficients périphériques ayant des amplitudes respectives plus faibles, ledit second masque correspondant aussi audit voisinage local de pixels ;

un second moyen de convolution (50) pour calculer, pour chaque pixel courant de l'image originale, une valeur de pixel flou élevé au carré en convoluant ledit second masque de coefficients de pondération avec les valeurs au carré des amplitudes fournies par ledit second moyen d'élévation au carré (45) ;

un second moyen de soustraction (60) pour soustraire la sortie du premier moyen d'élévation au carré (45a) de la sortie dudit second moyen de convolution (50) afin de produire une variance pondérée centrée $(V_{i,j})$ ; et

une table de consultation (70) définissant ledit facteur K en fonction de la variance pondérée et transmettre vers ledit moyen de multiplication (25), pour chaque pixel courant de l'image originale, le facteur K correspondant.

2. Dispositif selon la revendication 1, dans lequel la valeur de pixel filtrée (Z') correspondant à la nouvelle image plus précise par rapport à l'image originale d'un degré proportionnel à la quantité par laquelle ladite variance pondérée centrée $(V_{i,j})$ dépasse une première valeur prédéterminée $(V_1)$, et de ce fait la précision maximale est obtenue lorsque la variance pondérée centrée $(V_{i,j})$ est égale ou supérieure à une seconde valeur prédéterminée $(V_2)$ supérieure à ladite première valeur prédéterminée $(V_1)$.

3. Dispositif selon la revendication 1, dans lequel la valeur de pixel filtrée (Z') correspondant à la nouvelle image floue par rapport à l'image originale d'un degré proportionnel à la quantité par laquelle ladite variance pondérée centrée $(V_{i,j})$ est inférieure à ladite première valeur prédéterminée $(V_1)$.

4. Dispositif selon la revendication 2, dans lequel ladite seconde valeur prédéterminée $(V_2)$ est comprise entre une variance représentative de zones texturées de l'image originale et une variance représentative des zones de bord de ladite image originale.

5. Dispositif selon l'une quelconque des revendications 2 ou 3, dans lequel ladite première variance pondérée centrée $(V_1)$ correspond à la valeur moyenne des variances des zones uniformes de l'image originale.

6. Dispositif selon la revendication 1, dans lequel ladite table de consultation (70) définissant le facteur de multiplication K en fonction de ladite variance pondérée centrée $(V_{i,j})$ définit ledit facteur de multiplication K comme fonction croissante de ladite variance pondérée centrée dans un intervalle fini de ladite variance, de ce fait ledit facteur K a une valeur choisie faible lorsque ladite variance pondérée centrée présente une valeur égale ou inférieure à une première valeur déterminée $(V_1)$ correspondant à la valeur moyenne de la variance des zones uniformes de l'image originale, ledit facteur K croissant jusqu'à une valeur choisie haute lorsque ladite variance pondérée centrée présente une valeur égale ou supérieure à une seconde valeur déterminée $(V_2)$, ladite seconde valeur déterminée $(V_2)$ étant comprise entre une une variance représentative de zones texturées de l'image originale et une variance représentative des zones de bord de ladite image originale.

7. Dispositif selon la revendication 1 comprenant en plus un troisième moyen moyen d'élévation au carré (52) pour calculer les carrés de chacun des coefficients de pondération $(W_{i,j})$ et transmettre le carré du coefficient de pondération audit second moyen de convolution (50) à la place dudit coefficient de pondération.

8.  Dispositif selon la revendication 7, dans lequel le troisième moyen moyen d'élévation au carré (52) comprend un moyen pour élever chacun des coefficients de pondération à une puissance variable, ladite puissance étant comprise entre la valeur unité et un nombre choisi plus grand que en proportion de la grandeur reçue à la borne d'entrée (52a) de ce troisième moyen, ledit dispositif comprenant aussi un moyen pour calculer la variance ($V_{i,j}$) du pixel courant et transmettre ladite variance à ladite borne d'entrée (52a), de ce fait la puissance variable dudit troisième moyen d'élévation au carré (52) croit lorsque la variance croit.

9.  Dispositif selon l'une quelconque des revendications 1 ou 8, dans lequel ladite table de consultation (70) définissant le facteur de multiplication K en fonction de ladite variance pondérée centrée ($V_{i,j}$) transmet une valeur de K élevée qui produit un maximum de précision dans l'image résultante en réponse à la réception d'une valeur de variance au moins égale à la valeur de variance correspondant aux zones de bord de l'image et transmet une valeur de K faible qui produit un maximum d'image floue en réponse à la réception d'une valeur de variance au plus égale à la valeur de variance correspondant aux zones uniformes de l'image, de ce fait le dispositif fournit à la fois une précision dans l'image et une suppression du bruit dans la même image.

10.  Dispositif selon la revendication 9, dans lequel la valeur élevée de K est supérieure à l'unité et la valeur faible de K est inférieure à zéro.

**FIG. I**

55

$w_{i'-m,j'+m}$

$w_{i'+m,j'+m}$

$w_{i'+l,j'+l}$

$w_{i',j'}$

$w_{i'-m,j'-m}$

$w_{i'+m,j'-m}$

**FIG. 2B**

$A_{EFF}$

$w_{i,j}$

j

i

**FIG. 2A**

j

i

**FIG. 2C**

FIG. 3A

FIG. 3B

FIG. 3C

FIG. 4

FIG. 5